# EUROPEAN PATENT APPLICATION

(11) **EP 2 472 877 A1**
(43) Date of publication of application: **04.07.2012**
(21) Application number: 10811496.8
(22) Date of filing: 24.08.2010
(51) Int. Cl.: H04N 9/804, H04N 21/433, H04N 21/434

(54) **RECORDING DEVICE AND PLAYBACK DEVICE**

(30) Priority: 25.08.2009 JP 2009194005
(71) Applicant: Panasonic Corporation, Kadoma-shi Osaka 571-8501 (JP)
(72) Inventor: NAKAZAWA, Taiho, Chuo-ku Osaka-shi Osaka 540-6207 (JP)
(74) Representative: Kügele, Bernhard
(86) International application number: PCT/JP2010/005194
(87) International publication number: WO 2011/024437

(57) **Abstract**

The present invention includes: a packet selection unit (102) that selects predetermined packets from input transport packets; a packet deletion determination unit (107) that determines whether or not to delete packets not selected by the packet selection unit (102); and a count unit (108) that counts the predetermined number of the packets selected by the packet selection unit (102). It is therefore possible to record Null packets, which are not necessary in recording, at a requisite minimum every corresponding mode without deleting the Null packets. As a result, it is possible to maintain the same interval of the TS packets as that applied in receiving them.

## Description

### [Technical Field]

The present invention relates to methods of recording Transport Stream (TS) packets onto a recording medium, and recording/reproducing apparatuses that output the recorded TS packets to the outside.

### [Background Art]

In order to increase a total recordable amount of programs on a single recording medium, it is general to record TS packets of the programs onto the recording medium while deleting TS packets not necessary in video reproduction (hereinafter, these packets are referred to as "Null packets") (see Patent Literatures 1 and 2, for example).

### [Citation List]

### [Patent Literature]

[PTL 1] Japanese Unexamined Patent Application Publication No. 2000-165361
[PTL 2] Japanese Patent No. 3408469

### [Summary of Invention]

### [Technical Problem]

The above-described technique has a problem to be solved. In the technique, TS packets are deleted up to requisite minimum when they are recorded onto a recording medium. However, there is a situation, for example, where new TS packets are to be added to the recorded TS packets in order to add information, when the recorded TS packets are transmitted to an external apparatus. In such a situation, it is not possible to output the received TS packets at the same interval as that applied in receiving.

More specifically, if the same interval of the TS packets cannot be maintained, especially if the additional TS packets shorten the TS packet interval, various troubles would happen. For example, a transmission speed of an externally-output unit or a receiving speed of an external receiving apparatus would not catch up with the TS packet interval. Even if the external receiving apparatus can receive the TS packets, there remains a risk in video reproduction that a buffer in the external receiving apparatus causes overflow due to the required excessive speed of reading video, audio, and data broadcast.

In general, TS-receiving apparatuses ensure a receiving capability and a buffer model in conformity to broadcast TS. It is therefore desirable to maintain the original interval of the received TS also in transmission of the TS to an external apparatus. However, in above-mentioned Patent Literature 1, outputting to external apparatuses is not considered. Although there is a technique as disclosed in above-mentioned Patent Literature 2 by which a part or all of TS packets are replaced by different TS packets, the technique cannot be applied if the number of TS packets is increased.

Here, examples of the information addition are given below. When a TS requesting copyright protection is copied or moved to a connected external recording apparatus by using a copyright protection scheme of Digital Transmission Content Protection over Internet Protocol (DTCP-IP), a DTCP descriptor is written to a Program Map Table (PMT) packet. As a result, a data amount to be recorded on a PMT exceeds a TS packet size (188 bytes), and the TS packet would be therefore divided into two TS packets. Eventually, one more TS packet needs to be inserted for one recorded PTM packet.

Furthermore, there is a situation where a broadcast program offering only one language is recorded, and later an audio TS of a different language is recorded for the same program. In the situation, in order to output the two audios as selectable TS to the outside, it is necessary to insert, into the originally-recorded TS, a new TS having the same bit rate as that of the original audio TS.

Likewise, there are situations where original recorded one is replaced by a video with higher quality than the recorded one, new data broadcast, or close-captioned broadcast. In either situation, it is necessary to insert TS corresponding to a difference between a bit rate of previously-recorded video TS and a bit rate of replacing TS.

### [Solution to Problem]

In order to address the above-described problems, an object of the present invention is to maintain the same interval of TS packets as that applied in receiving the TS packets, by recording Null packets for each corresponding mode in recording the TS packets, without deleting the Null packets as unnecessary.

### [Advantageous Effects of Invention]

According to the present invention, it is possible to increase a total recordable amount of broadcast programs by deleting Null packets at maximum in recording TS. Therefore, when the recorded TS is to be transmitted to an external apparatus, it is possible to maintain the same TS interval as that applied in receiving the TS. As a result, the external apparatus can reproduce the transmitted TS, as far as the external apparatus has functions of generally recording and reproducing broadcast.

### [Brief Description of Drawings]

**[****FIG. 1]** FIG. 1 is a block diagram showing a structure of a recording/reproducing apparatus 1 according to Embodiment 1.
**[****FIG. 2]** FIG. 2 is a block diagram showing a structure of a recording/reproducing apparatus 2 according to Embodiment 2.

### [Description of Embodiments]

### [Embodiment 1]

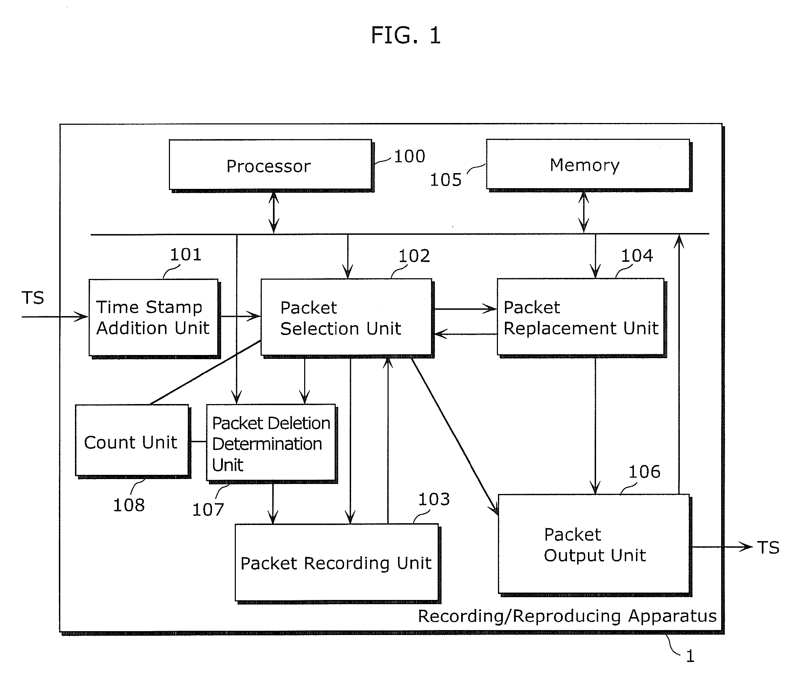

The following describes embodiments of the present invention in detail. FIG. 1 is a block diagram of a recording/reproducing apparatus 1 according to Embodiment 1 of the present invention. The recording/reproducing apparatus 1 includes: a function of determining whether or not a Null packet is to be deleted; and a count unit used in the function. Thereby, the recording/reproducing apparatus 1 can perform the packet addition in the similar manner as the example using PMT which has been described in the Technical Problem.

The recording/reproducing apparatus 1 according to Embodiment 1 includes a processor 100, a time stamp addition unit 101, a packet selection unit 102, a packet recording unit 103, a packet replacement unit 104, a memory 105, a packet output unit 106, a packet deletion determination unit 107, and a count unit 108.

The time stamp addition unit 101 adds time stamps to input Transport Stream (TS). The packet selection unit 102, which is connected to the time stamp addition unit 101, selects packets having predetermined Packet IDentification (PID). On the packet recording unit 103, which is connected to the packet selection unit 102, the packets selected by the packet selection unit 102 are recorded. The packet replacement unit 104, which is connected to the packet selection unit 102, replaces the packets selected by the packet selection unit 102 by different packets. The memory 105 is used in the packet replacement performed by the packet replacement unit 104.

The packet output unit 106 is connected to the packet selection unit 102 and the packet replacement unit 104. The packet output unit 106 superimposes the packets replaced by the packet replacement unit 104 on the packets selected by the packet selection unit 102, and outputs the result. The packet deletion determination unit 107, which is connected to the packet selection unit 102, determines whether or not each of packets not selected by the packet selection unit 102 is to be deleted. The count unit 108, which is connected to the packet selection unit 102, counts the number of the packets having the predetermined PID which are selected by the packet selection unit 102. The processor 100 controls each of the units in the recording/reproducing apparatus 1.

Next, the description is given for a method performed by the recording/reproducing apparatus 1 to record received TS.

First, the time stamp addition unit 101 adds, to each of received TS packets, a time stamp indicating a receiving time of the TS packet. Then, the time stamp addition unit 101 provides the time-stamped TS packets to the packet selection unit 102. Based on PID of each TS packet, the packet selection unit 102 selects TS packets to be recorded from among the provided TS packets, and then provides the selected TS packet to the packet recording unit 103. Here, the PID indicating a packet to be recorded has been set by the processor 100. The packet selection unit 102 has a function of providing the processor 100 with Specific Information (SI) such as a Program Association Table (PAT) or a PMT of each packet. Based on the SI, the processor 100 learns PID of packets to be recorded. The packet recording unit 103 is a non-volatile memory such as a hard disk. The time-stamped TS is recorded on the packet recording unit 103.

Packets which are not selected by the packet selection unit 102 are provided as Null packets to the packet deletion determination unit 107. The packet deletion determination unit 107 determines whether or not each of the Null packets provided from the processor 100 is to be deleted. Here, the packet deletion determination unit 107 can change setting (in other words, conditions) for the determination.

For example, if one PMT TS packet is to be added, the determination is made based on the following setting. Every time the packet selection unit 102 detects PID of one PMT packet, the packet deletion determination unit 107 causes the count unit 108 to increment the number of the selected packets (namely, a count) by 1. If the count of the count unit 108 is not 0, the packet deletion determination unit 107 determines not to delete one Null packet but to provide it to the packet recording unit 103. When the Null packet is not deleted as described above, the count unit 108 decrements the count by 1. As a result, it is possible to record a Null packet for one PMT packet, every time the PMT packet is provided. On the other hand, if a Null packet does not satisfy the above conditions, the Null packet is determined not to be recorded but to be deleted in the same manner as described in the conventional technique.

Furthermore, if an interval of PMT packets is to be longer to some extent, it is preferable that the recording/reproducing apparatus 1 further includes a time stamp comparison unit and a time stamp interval setting unit. The time stamp comparison unit monitors time stamps. Based on a time stamp monitored when the packet selection unit detects a PMT packet, the time stamp comparison unit performs setting for the determination so that a Null packet immediately after lack of a predetermined number of time stamps is determined not to be deleted. The time stamp interval setting unit sets an interval of time stamps.

It should be noted that a PMT packet has been described as one example, but the recording/reproducing apparatus 1 can offer the same effects for any other TS packet such as a PAT packet.

It should also be noted that it has been described above for simplified explanation that it is determined that a Null packet is not to be deleted if a PMT packet is detected. However, it is also possible to make the above determination based on plural kinds of PID. It is further possible that the recording/reproducing apparatus 1 includes a plurality of the count units 108 to set various conditions (setting) for the determination. For example, the plurality of the count units 108 can be used to record one Null packet every time two PMT packets are detected. They are also used to record one Null packet every time every time one PAT packet is detected, or record two Null packets every time one PMT packet is detected.

It should also be noted that, although Null packets may not be changed from what they have been received, the packet deletion determination unit 107 may include a function of rewriting pieces of PID so that they are unified into PID (0 x 1FFF) of original Null packets.

In order to associate plural kinds of PID with Null packets, the processor 100 sets, in the packet deletion determination unit 107, the plural kinds of PID indicating Null packets to be recorded. The packet deletion determination unit 107 therefore rewrites PID of packets and provides the results to the packet recording unit 103. Management information for the plural kinds of PID for Null packets is recorded on the packet recording unit 103 or a different recording unit provided in the recording/reproducing apparatus 1.

Next, the description is given for a method performed by the recording/reproducing apparatus 1 according to Embodiment 1 to output the packets recorded on the packet recording unit 103 to an external apparatus. The packet selection unit 102 reads the packets recorded on the packet recording unit 103, and provides the packet output unit 106 with packets having PID each indicating that the corresponding packet is to be outputted. The PID indicating that the corresponding packet is to be outputted has been set by the processor 100.

Here, the packet output unit 106 changes output processing depending on an interface to which the packets are outputted. If real-time transfer is necessary like in IEEE1394, the recording/reproducing apparatus 1 includes a function of controlling outputting timings by using time stamps. If the packets are to be outputted as Internet Protocol (IP) packets like in Digital Living Network Alliance (DLNA), the recording/reproducing apparatus 1 includes, for example, a function of outputting the packets to the memory 105.

Here, it is assumed that, when a descriptor is to be added to a PMT packet, the processor 100 determines, based on SI notified from the packet selection unit 102, that the PMT packet should be replaced by the descriptor. Under the assumption, the processor 100 notifies PID of the PMT packet to the packet selection unit 102 and the packet replacement unit 104. The packet selection unit 102 provides a packet having the notified PID to the packet replacement unit 104. On the other hand, the packet replacement unit 104 reads replacing data which the processor 100 has prepared in the memory 105, and replaces data of the packet having PMT PID transmitted from the packet selection unit 102, by the replacing data.

The packet selection unit 102 also has a function of providing the packet replacement unit 104 with packets (Null packets) each having PID indicating that the corresponding packet is not to be outputted. When data is added to a PMT packet and the PMT packet is therefore divided into a plurality of packets, the processor 100 prepares a plurality of replacing PMT packets in the memory 105 to be prepared for PID of Null packets. Then, the processor 100 controls the packet replacement unit 104 to replace the divided PMT packets by the prepared replacing PMT packets, respectively.

The above-described processing, in which Null packets are recorded at the packet interval applied in receiving the TS, does not change the packet interval even if a packet is replaced by a different packet. In other words, the above-described structure and method make it possible to output packets added with new packets to an external apparatus, while deleting unnecessary packets but maintaining packet interval of receiving the packets.

It should be noted that PMT packets have been used as one example, but the recording/reproducing apparatus 1 can offer the same effects for any other TS packets such as PAT packets.

If packet replacement is required based on plural kinds of PID, as described above, the processor 100 reads information indicating that Null packets are recorded by using the plural kinds of PID, and sets the packet replacement unit to, for example, replace, (a) a PMT packet and a Null packet 1 each of which has one of the plural kinds of PID by (b) different plural PMT packets, and replace (c) a PAT packet and a Null packet 2 each of which has another one of the plural kinds of PID by (b) different plural PAT packets.

### [Embodiment 2]

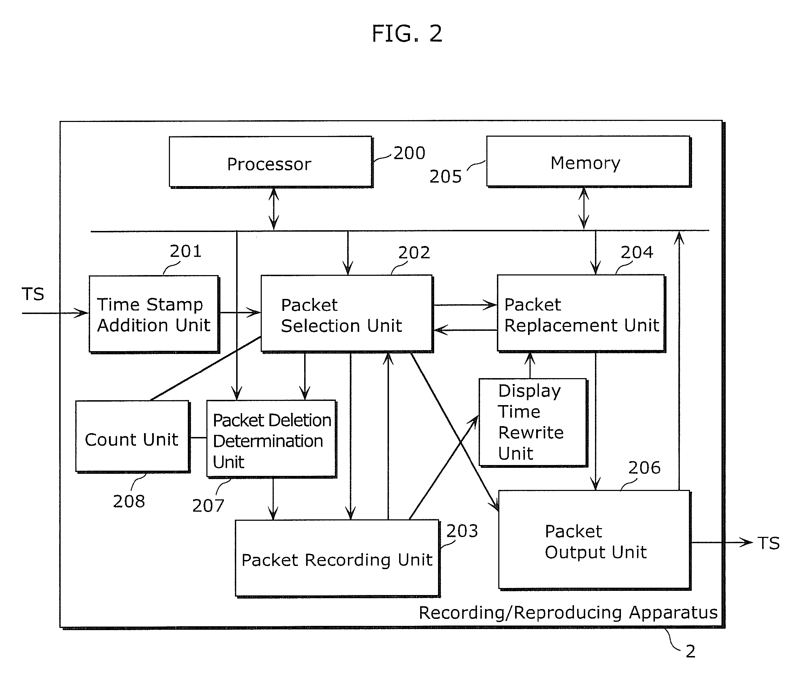

FIG. 2 is a block diagram of a recording/reproducing apparatus 2 according to Embodiment 2. The recording/reproducing apparatus 2 differs from the recording/reproducing apparatus 1 according to Embodiment 1 in that a display time rewrite unit is further included. The display time rewrite unit deals with addition of packet(s), such as audio, video, or caption packets described in Technical Problem, for which a bit rate and a display time are predetermined.

The recording/reproducing apparatus 2 according to Embodiment 2 includes a processor 200, a time stamp addition unit 201, a packet selection unit 202, a packet recording unit 203, a packet replacement unit 204, a memory 205, a packet output unit 206, a packet output unit 207, a count unit 208, and a display time rewrite unit 210.

The time stamp addition unit 201 adds time stamps to input Transport Stream (TS). The packet selection unit 202, which is connected to the time stamp addition unit 201, selects packets having predetermined PID. On the packet recording unit 203, which is connected to the packet selection unit 202, the packets selected by the packet selection unit 202 are recorded. The packet replacement unit 204, which is connected to the packet selection unit 202, replaces the packets selected by the packet selection unit 202 by different packets. The memory 205 is used in the packet replacement performed by the packet replacement unit 204.

The packet output unit 206 is connected to the packet selection unit 202 and the packet replacement unit 204. The packet output unit 206 superimposes the packets replaced by the packet replacement unit 204 on the packets selected by the packet selection unit 202, and outputs the result. The packet deletion determination unit 207, which is connected to the packet selection unit 202, determines whether or not each of packets not selected by the packet selection unit 102 is to be deleted. The count unit 208, which is connected to the packet selection unit 202, counts the number of the packets having the predetermined PID which are selected by the packet selection unit 202. The display time rewrite unit 210 changes a time of displaying each of the selected packets. The processor 200 controls each of the units in the recording/reproducing apparatus 2.

First, the description is given for a method performed by the recording/reproducing apparatus 2 to record packets.

The time stamp addition unit 201 adds, to each of received TS packets, a time stamp indicating a receiving time of the TS packet. Then, the time stamp addition unit 201 provides the time-stamped TS packets to the packet selection unit 202. Based on PID of each TS packet, the packet selection unit 202 selects TS packets to be recorded from among the provided TS packets, and then provides the selected TS packet to the packet recording unit 203. Here, the PID indicating a packet to be recorded has been set by the processor 200. The packet selection unit 202 has a function of providing the processor 200 with SI such as a PAT or a PMT of each packet. Based on the SI, the processor 200 learns PID of packets to be recorded.

The packet recording unit 203 is a non-volatile memory such as a hard disk. The time-stamped TS is recorded on the packet recording unit 203.

Packets which are not selected by the packet selection unit 202 are provided as Null packets to the packet deletion determination unit 207. The packet deletion determination unit 207 determines whether or not each of the Null packets provided from the processor 200 is to be deleted. Here, the packet deletion determination unit 207 can change setting (in other words, conditions) for the determination.

For example, if audio packets of 256 Kbps at maximum are to be added, the processor 200 causes the packet deletion determination unit 207 to make the determination based on the following setting (conditions). Here, audio data of 256 Kbps can be stored in 179 TS packets per one second at minimum. Therefore, it is assumed here that 400 Null packets are recorded every one second to ensure enough allowance.

The count unit 208 starts counting from a count of 400. Every time the packet deletion determination unit 207 is determined to record one Null packet, the count unit 208 decrements the count by 1. The count unit 208 resets the count to 400 every one second.

If a Null packet to be recorded is to be smoothed, it is preferable that the recording/reproducing apparatus 2 further includes a time stamp comparison unit (not shown) and a time stamp interval setting unit, and that it is thereby determined to record a received Null packet if a value generated by adding a time stamp and a time stamp interval is equal to a time stamp of the received Null packet.

If there are not 400 Null packets in one second, it is also possible to control the count unit 208 to count a remaining count value added with 400, without resetting the count to 400.

It should be noted that the 400 audio packets of 256 Kbps have been used as an example, but other packets, such as video or caption packets, having other bit rate and the number of packets may be used.

The count unit 208 may reset the count not every one second but every any desired time period. The processor 200 may reset the count at any desired timing.

Next, the description is given for a method performed by the recording/reproducing apparatus 2 according to Embodiment 2 to output the packets recorded on the packet recording unit 203 added with other packets separately recorded on the packet recording unit 203, to an external apparatus. It is assumed in the following example that the TS packets recorded on the packet recording unit 203 are added with audio packets which are separately recorded on the packet recording unit 203.

The packet selection unit 202 reads the packets recorded on the packet recording unit 203, and provides the packet output unit 206 with packets having PID each indicating that the corresponding packet is to be outputted. The PID indicating that the corresponding packet is to be outputted has been set by the processor 200.

The processor 200 writes PID of each of the audio packets into a PMT with reference to SI notified from the packet selection unit 202. Then, in the same manner as described in Embodiment 1, the processor 200 sets the packet replacement unit 204 to perform the PMT packet replacement, and at the same time, sets the packet replacement unit 204 to read additional audio packets from the packet recording unit 203 and replace Null packets provided from the packet selection unit 202 by the additional audio packets.

If video, audio, or caption is to be added, each packet includes a Presentation Time Stamp (PTS)/Decoding Time Stamp (DTS) (PTS=DTS for audio) indicating a time of outputting audio. Therefore, the processor 200 calculates a difference between (a) a value of a PTS of an audio packet at a start position of a program and (b) a value of a PTS of an additional audio packet. Then, the processor 200 sets the calculated difference to the display time rewrite unit 210.

The packet replacement unit 204 replaces Null packets provided from the packet selection unit 202 by additional audio packets having rewritten PTS values, and provides the results to the packet output unit 206.

The above-described structure and method make it possible to output received packets added with different audio packets to an external apparatus, while deleting unnecessary packets but maintaining packet interval of the received packets.

It should be noted that audio packets have been used as one example, but the recording/reproducing apparatus 2 can offer the same effects for any other packets such as video packets or caption packets.

As described above, the recording apparatus includes: a packet selection unit configured to select one or more predetermined packets from input transport packets; a packet deletion determination unit configured to determine whether or not to delete a non-selected packet that is not selected by the packet selection unit; a count unit configured to count a number of the one or more predetermined packets selected by the packet selection unit; and a packet recording unit on which a packet to be outputted to outside is recorded, wherein the packet deletion determination unit is configured to record the non-selected packet onto the packet recording unit without deleting the non-selected packet, when the number of the one or more predetermined packets counted by the count unit is less than a predetermined number or packets.

The recording apparatus may further include a packet replacement unit configured to replace the non-selected packet by a different kind of a packet, wherein the packet replacement unit is configured to provide the different kind of the packet to the packet recording unit.

The count unit may be configured to count N packet every M second.

The recording apparatus includes a unit configured, when Transport Stream (TS) packets are to be recorded, to determine to: (i) record at least one of Null packets which satisfies an arbitrarily-changeable condition; and (ii) delete an unnecessary rest of the Null packets which does not satisfy the arbitrarily-changeable condition, the Null packets being not required to reproduce the TS packets.

The recording apparatus may further include a count unit; and a packet deletion determination unit configured to (i) record N Null packet of the Null packets every time a certain PID is detected, and (ii) delete a rest of the Null packets which is not recorded.

The recording apparatus may further include a packet deletion determination unit configured to (i) record N Null packet of the Null packets every M second, and (ii) delete a rest of the Null packets which is not recorded.

The recording apparatus may further include a packet deletion determination unit configured to (i) compare time stamps to each other to set a condition for recording the Null packets, and (ii) determine to (ii-1) record a Null packet of the Null packets only when there is a predetermined interval between the time stamps, and (ii-2) delete a rest of the Null packets which is not recorded.

The recording apparatus includes a unit configured to (i) convert a packet having one or more kinds of ID included in a program into a packet having one kind of ID, and (ii) record the packet having the one kind of ID.

The recording apparatus includes: a unit configured to (i) convert a packet having one or more kinds of ID included in a program into a packet having two or more kinds of IDs, and (ii) record the packet having the two or more kinds of IDs; and a unit configured to record information onto a non-volatile memory, the information associating the program that is recorded with the two or more kinds of IDs.

The reproducing apparatus replaces a packet having a certain PID by a separately-recorded packet and replaces a Null packet by another separately-recorded packet, when recorded packets are to be outputted to an external apparatus.

The reproducing apparatus may further include a packet replacement unit configured to (i) calculate a time difference based on information of the packet to be replaced and outputted, when the separately-recorded packet includes time information, and (ii) correct the time information.

The present invention may be implemented also as the reproducing apparatus including a unit configured to (i) replace two or more different kinds of packets having respective different IDs by packets each having one certain PID, when recorded packets including the two or more different kinds of packets are to be outputted to an external apparatus, and (ii) output the packets having the one certain PID to the external apparatus.

The present invention may be implemented also as a reproducing apparatus including a unit configured to (i) replace two or more different kinds of packets having respective different IDs sequentially by divided packets each having one certain PID, when recorded packets including the two or more different kinds of packets are to be outputted to an external apparatus, the divided packets being generated by dividing data of a packet into pieces, and (ii) output the divided packets to the external apparatus.

### [Industrial Applicability]

For recording/reproducing apparatuses in conformity to services for copy-right protection and addition of audio, video, caption, and the like to recorded packets while maximizing the number of packets recorded on a recording medium, the present invention enables the recording/reproducing apparatuses to be surely connected to external apparatuses and enables the external apparatuses to surely reproduce the packets.

### [Reference Signs List]

- 1, 2: recording/reproducing apparatus
- 100, 200: processor
- 101, 201: time stamp addition unit
- 102, 202: packet selection unit
- 103, 203: packet recording unit
- 104, 204: packet replacement unit
- 105, 205: memory
- 106, 206: packet output unit
- 107, 207: packet deletion determination unit
- 108, 208: count unit
- 210: display time rewrite unit

## Claims

1. A recording apparatus comprising:
a packet selection unit configured to select one or more predetermined packets from input transport packets;
a packet deletion determination unit configured to determine whether or not to delete a non-selected packet that is not selected by said packet selection unit;
a count unit configured to count a number of the one or more predetermined packets selected by said packet selection unit; and
a packet recording unit on which a packet to be outputted to outside is recorded,
wherein said packet deletion determination unit is configured to
record the non-selected packet onto said packet recording unit without deleting the non-selected packet, when the number of the one or more predetermined packets counted by said count unit is less than a predetermined number or packets.

2. The recording apparatus according to Claim 1, further comprising
a packet replacement unit configured to replace the non-selected packet by a different kind of a packet,
wherein said packet replacement unit is configured to provide the different kind of the packet to said packet recording unit.

3. The recording apparatus according to any one of Claims 1 and 2,
wherein said count unit is configured to count N packet every M second.

4. A recording apparatus comprising
a unit configured, when Transport Stream (TS) packets are to be recorded, to determine to: (i) record at least one of Null packets which satisfies an arbitrarily-changeable condition; and (ii) delete an unnecessary rest of the Null packets which does not satisfy the arbitrarily-changeable condition, the Null packets being not required to reproduce the TS packets.

5. The recording apparatus according to Claim 4, further comprising:
a count unit; and a packet deletion determination unit configured to (i) record N Null packet of the Null packets every time a certain PID is detected, and (ii) delete a rest of the Null packets which is not recorded.

6. The recording apparatus according to Claim 4, further comprising
a packet deletion determination unit configured to (i) record N Null packet of the Null packets every M second, and (ii) delete a rest of the Null packets which is not recorded.

7. The recording apparatus according to any one of Claims 4 to 6, further comprising
a packet deletion determination unit configured to (i) compare time stamps to each other to set a condition for recording the Null packets, and (ii) determine to (ii-1) record a Null packet of the Null packets only when there is a predetermined interval between the time stamps, and (ii-2) delete a rest of the Null packets which is not recorded.

8. A recording apparatus comprising
a unit configured to (i) convert a packet having one or more kinds of ID included in a program into a packet having one kind of ID, and (ii) record the packet having the one kind of ID.

9. A recording apparatus comprising:
a unit configured to (i) convert a packet having one or more kinds of ID included in a program into a packet having two or more kinds of IDs, and (ii) record the packet having the two or more kinds of IDs; and
a unit configured to record information onto a non-volatile memory, the information associating the program that is recorded with the two or more kinds of IDs.

10. A reproducing apparatus
which replaces a packet having a certain PID by a separately-recorded packet and replaces a Null packet by another separately-recorded packet, when recorded packets are to be outputted to an external apparatus.

11. The reproducing apparatus according to Claim 10, further comprising
a packet replacement unit configured to (i) calculate a time difference based on information of the packet to be replaced and outputted, when the separately-recorded packet includes time information, and (ii) correct the time information.

12. A reproducing apparatus comprising
a unit configured to (i) replace two or more different kinds of packets having respective different IDs by packets each having one certain PID, when recorded packets including the two or more different kinds of packets are to be outputted to an external apparatus, and (ii) output the packets having the one certain PID to the external apparatus.

13. A reproducing apparatus comprising
a unit configured to (i) replace two or more different kinds of packets having respective different IDs sequentially by divided packets each having one certain PID, when recorded packets including the two or more different kinds of packets are to be outputted to an external apparatus, the divided packets being generated by dividing data of a packet into pieces, and (ii) output the divided packets to the external apparatus.
